(19) **Europäisches Patentamt**
**European Patent Office**
**Office européen des brevets**

(11) **EP 2 240 370 B1**

(12) **EUROPEAN PATENT SPECIFICATION**

(45) Date of publication and mention
of the grant of the patent:
**25.04.2012 Bulletin 2012/17**

(21) Application number: **09708029.5**

(22) Date of filing: **29.01.2009**

(51) Int Cl.:
**B65D 1/02** *(2006.01)*     **B65D 23/00** *(2006.01)*
**B29C 49/08** *(2006.01)*     **B29C 49/48** *(2006.01)*

(86) International application number:
**PCT/US2009/032347**

(87) International publication number:
**WO 2009/099864 (13.08.2009 Gazette 2009/33)**

(54) **HYBRID BASE DESIGN**

HYBRIDBASISAUSFÜHRUNG

MODÈLE À BASE HYBRIDE

(84) Designated Contracting States:
**AT BE BG CH CY CZ DE DK EE ES FI FR GB GR
HR HU IE IS IT LI LT LU LV MC MK MT NL NO PL
PT RO SE SI SK TR**

(30) Priority: **31.01.2008 US 12168**

(43) Date of publication of application:
**20.10.2010 Bulletin 2010/42**

(73) Proprietor: **Amcor Limited
Hawthorn, VIC 3122 (AU)**

(72) Inventor: **LANE, Michael T.
Brooklyn
Michigan 49230 (US)**

(74) Representative: **Matkowska, Franck
Matkowska & Associés
9, rue Jacques Prévert
59650 Villeneuve d'Ascq (FR)**

(56) References cited:
**EP-A1- 1 645 515**     **WO-A2-2006/072392**
**JP-A- 11 059 646**     **US-A1- 2004 060 896**
**US-A1- 2004 060 896**     **US-A1- 2004 211 746**
**US-A1- 2007 108 232**     **US-B1- 6 269 962**
**US-B2- 7 097 059**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

## Description

### TECHNICAL FIELD

This disclosure generally relates to plastic containers for retaining a commodity, such as a solid or liquid commodity. More specifically, this disclosure relates to a one-piece blown container having an improved base.

### BACKGROUND

As a result of environmental and other concerns, plastic containers, more specifically polyester and even more specifically polyethylene terephthalate (PET) containers are now being used more than ever to package numerous commodities previously supplied in glass containers. Manufacturers and fillers, as well as consumers, have recognized that PET containers are lightweight, inexpensive, recyclable and manufacturable in large quantities.

Blow-molded plastic containers have become commonplace in packaging numerous commodities. PET is a crystallizable polymer, meaning that it is available in an amorphous form or a semi-crystalline form. The ability of a PET container to maintain its material integrity relates to the percentage of the PET container in crystalline form, also known as the "crystallinity" of the PET container. The following equation defines the percentage of crystallinity as a volume fraction:

$$\% \text{ Crystallinity} = (\frac{\rho - \rho_a}{\rho_c - \rho_a}) x 100$$

where $\rho$ is the density of the PET material; $\rho_a$ is the density of pure amorphous PET material (1.333 g/cc); and $\rho_c$ is the density of pure crystalline material (1.455 g/cc).

Container manufacturers use mechanical processing and thermal processing to increase the PET polymer crystallinity of a container. Mechanical processing involves orienting the amorphous material to achieve strain hardening. This processing commonly involves stretching an injection molded PET preform along a longitudinal axis and expanding the PET preform along a transverse or radial axis to form a PET container. The combination promotes what manufacturers define as biaxial orientation of the molecular structure in the container, Manufacturers of PET containers currently use mechanical processing to produce PET containers having (approximately 20% crystallinity in the container's sidewall.

A one-piece plastic container having the characteristics defined in the preamble of claim 1 is disclosed for example in US patent application 2007/0108232. Typically, an upper portion of the plastic container defines an opening. This upper portion is commonly referred to as a finish and includes some means for engaging a cap or closure to close off the opening. In the traditional injection-stretch blow molding process, the finish remains substantially in its injection molded state white the container body is formed below the finish. The finish may include at least one thread extending radially outwardly around an annular sidewall defining a thread profile. In one application, a closure member or cap may define a complementary thread, or threads, that are adapted to cooperatively mate with the threads of the finish.

In some applications, plastic containers must withstand extreme temperatures and pressures, while providing an improved heat resistance and an ability to withstand vacuum forces at a reduced weight as compared to traditional designs. In other examples, conventional plastic containers that are cylindrical in profile, do not include a base design with adequate vertical load bearing properties.

Thus, there is a need for a plastic container design that has a base capable of withstanding vacuum forces resulting from hot-filling and subsequent cooling of its contents.

### SUMMARY

The invention relates to a one-piece plastic container as defined in claim 1. . The sidewall portion can be integrally formed with and extend from the upper portion to the base portion. According to one example, the plastic container can have six (6) modulating ribs. The base portion can define a plurality of facets formed between adjacent modulating vertical ribs.

According to yet other features, the finish defines a means for attaching a closure thereon. The means for attaching a closure includes at least one thread. The container is composed of polyethylene terephthalate. The sidewall portion and the base portion are biaxially oriented.

Additional benefits and advantage of the present disclosure will become apparent to those skilled in the art to which the present disclosure relates from the subsequent description and the appended claims, taken in conjunction with the accompanying drawing, It will also be appreciated by those skilled in the art to which the present disclosure relates that the container of the present disclosure may be manufactured utilizing alternative blow molding processes to those disclosed.

### BRIEF DESCRIPTION OF THE DRAWINGS

FIG. 1 is a side elevational view of a one-piece plastic container constructed in accordance with the teachings off the present disclosure.

FIG. 2 is a side view of the one-piece plastic container of FIG. 1.

FIG. 3 is a bottom elevational view of the one-piece plastic container of FIG. 1 illustrating a container base.

FIG. 4 is a bottom view of the one-piece plastic container of FIG. 1; and

FIG. 5 is a sectional view of an exemplary mold cavity used during formation of the container of FIG. 1 and shown with a preform positioned therein.

DETAILED DESCRIPTION

The following description is merely exemplary in nature, and is in no way intended to limit the disclosure or its application or uses.

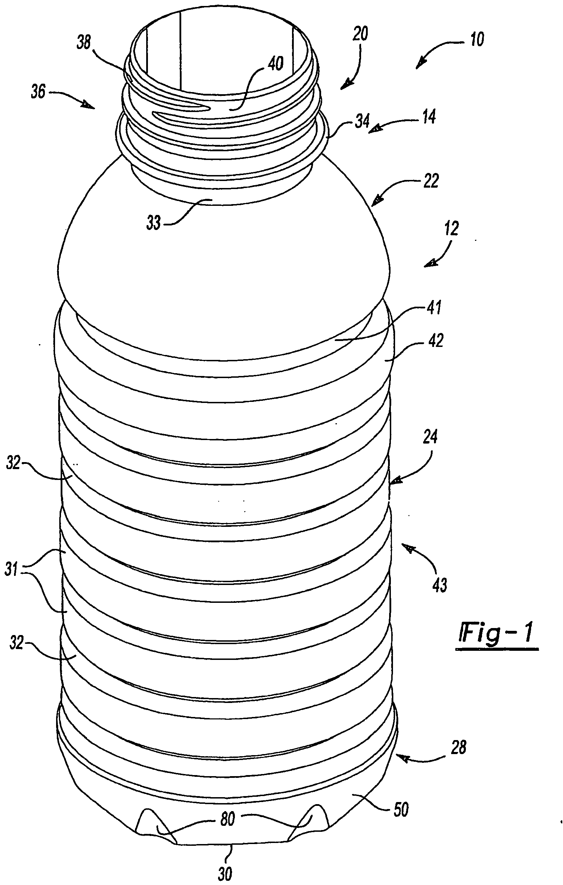

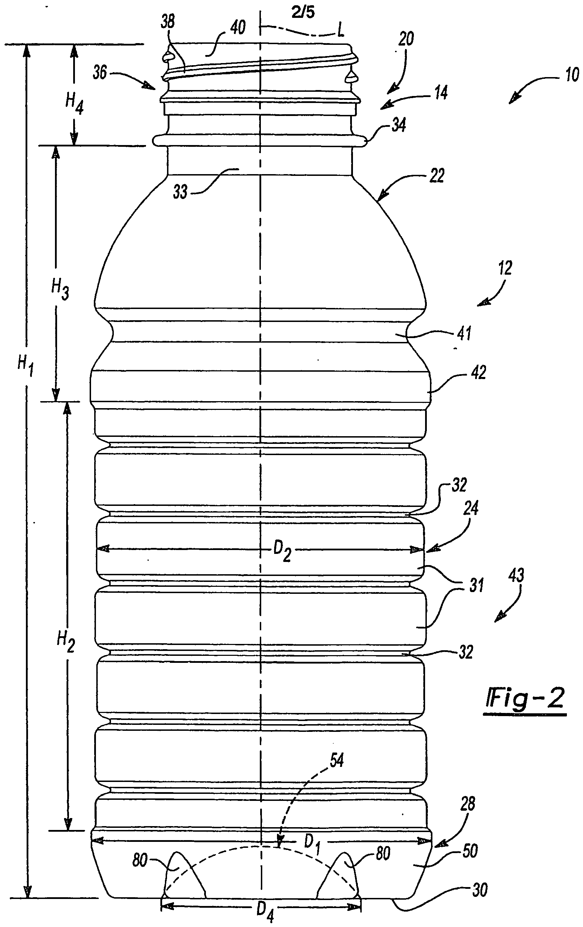

FIGS. 1-4 show one preferred embodiment of the present container. In the Figures, reference number 10 designates a one-piece plastic, e.g. polyethylene terephthalate (PET), container. The plastic container 10 can define a longitudinal axis L (FIG. 2) and be substantially cylindrical in cross section. In this particular embodiment, the plastic container 10 has a volume capacity of about one 12 fl. oz. (355 cc). Those of ordinary skill in the art would appreciate that the following teachings of the present disclosure are applicable to other containers, such as rectangular, triangular, hexagonal, octagonal or square shaped containers, which may have different dimensions and volume capacities. It is also contemplated that other modifications can be made depending on the specific application and environmental requirements.

As shown in FIG. 1, the one-piece plastic container 10 according to the present teachings defines a container body 12, and includes an upper portion 14 having a finish 20. Integrally formed with the finish 20 and extending downward therefrom is a shoulder region 22. The shoulder region 22 merges into and provides a transition between the finish 20 and a sidewall portion 24. The sidewall portion 24 extends downward from the shoulder region 22 to a base portion 28 having a base 30. The sidewall portion 24 can define a series of horizontal lands 31 and horizontal ribs 32. The horizontal lands and ribs 31 and 32, respectively can extend continuously in a vertical direction from the shoulder region 22 to the base portion 28.

A neck 33 may also be included having an extremely short height, that is, becoming a short extension from the finish 20, or an elongated height, extending between the finish 20 and the shoulder region 22. A support ring 34 can be defined on the neck 33. The finish 20 further includes a threaded region 36 having at least one thread 38 formed on an annular sidewall 40. The threaded region 36 provides a means for attachment of a similarly threaded closure or cap (not shown). The cap can define at least one thread formed around an inner diameter for cooperatively riding along the thread(s) 38 of the finish 20. Alternatives may include other suitable devices that engage the finish 20 of the plastic container 10. Accordingly, the closure or cap engages the finish 20 to preferably provide a hermetical seal of the plastic container 10. The closure or cap is preferably of a plastic or metal material conventional to the closure industry and suitable for subsequent thermal processing, including high temperature pasteurization and retort. A transition rib 41 and transition land 42 can be defined on the sidewall portion 24 and marks a transition between the shoulder region 22 and a label panel area 43. The label panel area 43 therefore, can be defined between the transition land 42 and the base portion 28. It is appreciated that because the plastic container 10 incorporates the transition rib 41 and transition land 42, the series of horizontal lands 31 and horizontal ribs 32 can extend continuously from the transition land 42 to the base portion 28.

The plastic container 10 has been designed to retain a commodity. The commodity may be in any form such as a solid or liquid product. In one example, a liquid commodity may be introduced into the container during a thermal process, typically a hot-fill process. For hot-fill bottling applications, bottlers generally fill the plastic container 10 with a liquid or product at an elevated temperature between approximately 155°F to 205°F (approximately 68°C to 96°C) and seal the plastic container 10 with a cap or closure before cooling. In addition, the plastic container 10 may be suitable for other high-temperature pasteurization or retort filling processes or other thermal processes as well. In another example, the commodity may be introduced into the plastic container 10 under ambient temperatures.

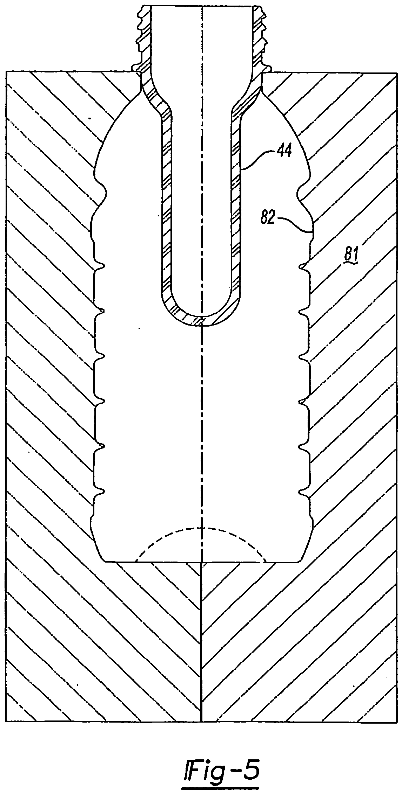

The plastic container 10 of the present disclosure is an injection-stretch blow molded, biaxially oriented container with a unitary construction from a single or multi-layer material. A well-known stretch-molding, heat-setting process for making the one-piece plastic container 10 generally involves the manufacture of a preform 44 (FIG. 5) of a polyester material, such as polyethylene terephthalate (PET), having a shape well known to those skilled in the art similar to a test-tube with a generally cylindrical cross section and a length typically approximately fifty percent (50%) that of the resultant container height. In one example, the preform 44 can be injection molded. As will be appreciated, the upper portion 14 remains substantially unchanged from its preform state while the container body 12 is formed below the finish 20. An exemplary method of manufacturing the plastic container 10 will be described in detail below.

Turning specifically now to FIG. 2, exemplary dimensions for the plastic container will be described. It is appreciated that other dimensions may be used. The plastic container 10 has an overall height $H_1$ of about 165.10 mm (6.50 inches). A height $H_2$ of the label panel area 43 may be 80.50 mm (3.17 inches). A height $H_3$ taken from the top of the label panel area 43 and the bottom of the support ring 34 may be 64.77 mm (2.55 inches). A height $H_4$ taken from the bottom of the support ring 34 and the top of the plastic container 10 may be 19.41 mm (0.76 inches). A diameter $D_1$ taken at the widest portion of the base portion 28 may be 63.39 mm (2.50 inches). A diameter $D_2$ taken at each of the horizontal lands 31 may be 61.72 mm (2.43 inches).

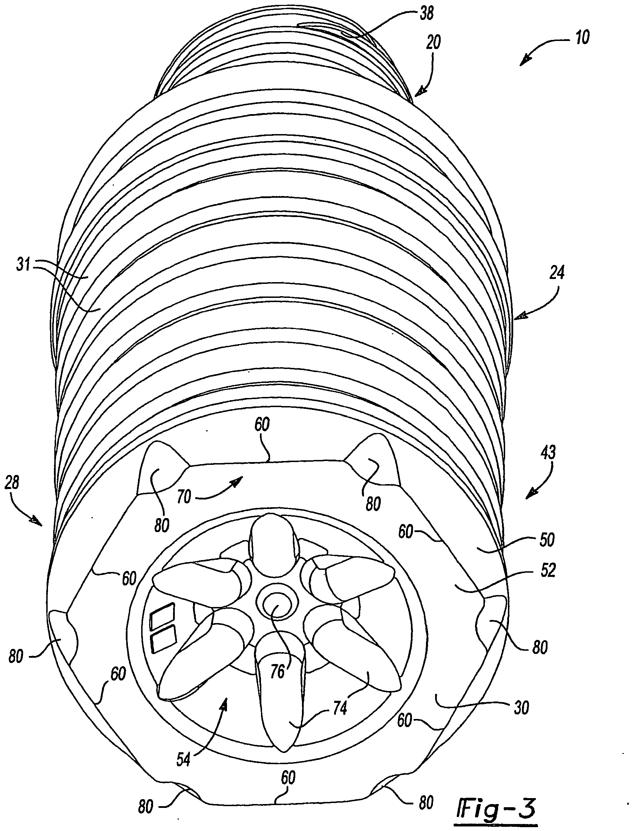

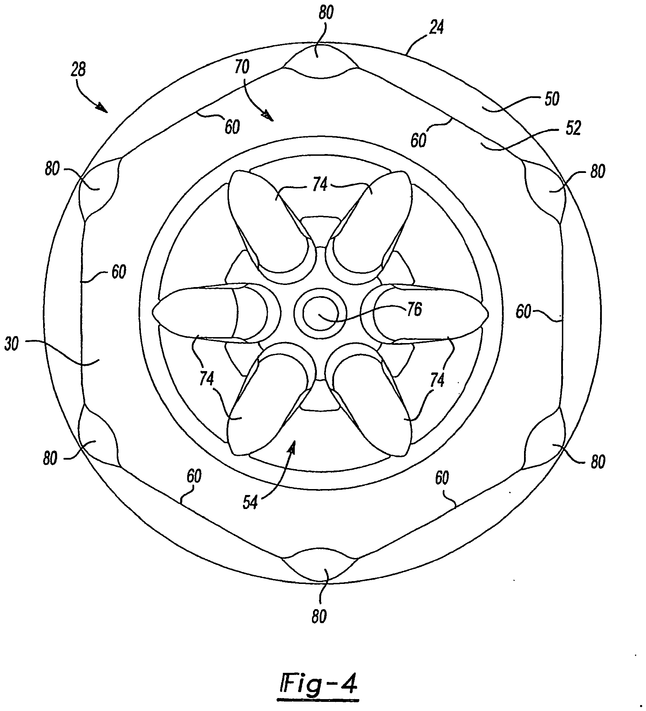

With specific reference now to FIGS. 3 and 4, the base portion 28 will be described in detail. The base portion 28 defines a radial sidewall 50 that transitions between the sidewall portion 24 and the base 30. The base 30 defines a continuous contact surface 52 defined generally between the radial sidewall 50 and a central pushup portion 54. A plurality of facets 60 are defined at a transition between the radial sidewall 50 and the continuous contact surface 52. The facets 60 can be generally linear. The continuous contact surface 52 is generally planar and defines a contact surface area 70 for supporting the plastic container 10 in an upright position. The central pushup portion 54 defines a plurality of radially arranged support ridges 74. The radially arranged support ridges 74 centrally converge toward a nub 76. As illustrated in FIG. 2, the central pushup portion 54 can define a diameter $D_4$ of 48.87 mm (1.92 inches). A plurality of modulating vertical detent ribs 80 are defined on the base portion 28 generally at a transition between the continuous contact surface 52 and the sidewall portion 24. While the example shown illustrates six (6) detent ribs 80, more or fewer detent ribs 80 may be formed on the base portion 28.

The detent ribs 80 are formed at a transition between adjacent facets 60. As a result, an otherwise sharp transition between adjacent facets 60 is de-emphasized. The resultant base portion 28 provides improved base stiffness (such as in the vertical direction) and strength of the plastic container 10 as a whole.

The plastic container 10 molded with the geometrical relationships according to the instant disclosure can be produced on high-speed blow-molding production platforms without compromising the functionality of the base portion 28 or the resultant plastic container 10 as a whole.

In one example, a machine (not illustrated) places the preform 44 heated to a temperature between approximately 190°F to 250°F (approximately 88°C to 121°C) into a mold cavity 81. The mold cavity 81 may be heated to a temperature between approximately 250°F to 350°F (approximately 121°C to 177°C). A stretch rod apparatus (not illustrated) stretches or extends the heated preform 44 within the mold cavity 81 to a length approximately that of the resultant plastic container 10 thereby molecularly orienting the polyester material in an axial direction generally corresponding with the central longitudinal axis L of the plastic container 10. Again, during the stretching process, the finish 20 remains unchanged in an injection molded state while the container body 12 is formed below the finish 20. While the stretch rod extends the preform 44, air having a pressure between 300 PSI to 600 PSI (2.07 MPa to 4.14 MPa) assists in extending the preform 44 in the axial direction and in expanding the preform 44 in a circumferential or hoop direction thereby substantially conforming the polyester material to the shape of the mold cavity 81 and further molecularly orienting the polyester material in a direction generally perpendicular to the axial direction, thus establishing the biaxial molecular orientation of the polyester material in most of the plastic container 10. The pressurized air holds the mostly biaxial molecularly oriented polyester material against a mold surface 82 of the mold cavity 81 for a period of approximately two (2) to five (5) seconds before removal of the plastic container 10 from the mold cavity 81. This process is known as heat setting and results in a heat-resistant container suitable for filling with a product at high temperatures. The disclosed base configuration improves ease of manufacture and results in more consistent material distribution in the base.

In another example, a machine (not illustrated) places the preform 44 heated to a temperature between approximately 185°F to 239°F (approximately 85°C to 115°C) into the mold cavity 81. The mold cavity 81 may be chilled to a temperature between approximately 32°F to 75°F (approximately 0°C to 24°C). A stretch rod apparatus (not illustrated) stretches or extends the heated preform 44 within the mold cavity 81 to a length approximately that of the resultant plastic container 10 thereby molecularly orienting the polyester material in an axial direction generally corresponding with the central longitudinal axis L of the plastic container 10. Again, during the stretching process, the finish 20 remains unchanged in an injection molded state while the container body 12 is formed below the finish 20. While the stretch rod extends the preform 44, air having a pressure between 300 PSI to 600 PSI (2.07 MPa to 4.14 MPa) assists in extending the preform 44 in the axial direction and in expanding the preform 44 in a circumferential or hoop direction thereby substantially conforming the polyester material to the shape of the mold cavity 81 and further molecularly orienting the polyester material in a direction generally perpendicular to the axial direction, thus establishing the biaxial molecular orientation of the polyester material in most of the plastic container 10. The pressurized air holds the mostly biaxial molecularly oriented polyester material against the mold surface 82 of the mold cavity 81 for a period of approximately two (2) to five (5) seconds before removal of the plastic container 10 from the mold cavity 81. This process is utilized to produce containers suitable for filling with product under ambient conditions or cold temperatures.

Alternatively, other manufacturing methods using other conventional materials including, for example, high density polyethylene, polypropylene, polyethylene naphthalate (PEN), a PET/PEN blend or copolymer, and various multilayer structures may be suitable for the manufacture of the plastic container 10. Those having ordinary skill in the art will readily know and understand plastic container manufacturing method alternatives.

While the above description constitutes the present disclosure, it will be appreciated that the disclosure is susceptible to modification, variation and change without departing from the proper scope and fair meaning of the accompanying claims.

**Claims**

1. A one-piece plastic container (10) comprising:

a cylindrical body (12) defining a longitudinal axis (L) and having an upper portion (14), a sidewall portion (24), and a base portion (28), said base portion (28) defining a radial sidewall (50) and a contact surface formed around a central pushup portion (54), **characterized in that** the contact surface (52) is generally planar and continuous and is extending .continuously around the central pushup portion (54), **in that** the container (10) is terminating at the generally planar and continuous contact surface (52) such that the generally planar and continuous contact surface (52) is operable to support the container (10) in an upright position, and **in that** the base portion (28) also includes a plurality of modulating vertical ribs (80) that are defined generally at a transition between the generally planar and continuous contact surface (52) and the sidewall portion (24).

2. The one-piece plastic container (10) of claim 1 wherein said sidewall portion (24) is integrally formed with and extends from said upper portion (14) to said base portion (28), said base portion (28) closing off an end of the container (10).

3. The one-piece plastic container (10) of claim 1 or 2 wherein said plurality of modulating vertical ribs (80) consists of six modulating vertical ribs (80).

4. The one-piece plastic container (10) of claim 1 or 2 wherein said plurality of modulating vertical ribs (80) consists of five modulating vertical ribs (80).

5. The one-piece plastic container (10) of claim 1 or 2 wherein said plurality of modulating vertical ribs (80) consists of seven modulating vertical ribs (80).

6. The one-piece plastic container (10) of any one of claims 1 to 5 wherein said upper portion (14) includes a finish (20).

7. The one-piece plastic container (10) of claim 6 wherein said finish (20) defines a means for attaching a closure thereon.

8. The one-piece plastic container (10) of claims 7 wherein said means for attaching a closure includes at least one thread (38).

9. The one-piece plastic container (10) of any one of claims 1 to 8 wherein the container (10) is composed of polyethylene terephthalate.

10. The one-piece plastic container (10) of any one of claims 1 to 9 wherein said sidewall portion (24) defines a plurality of ribs (32) arranged substantially perpendicular to said longitudinal axis (L).

11. The one-piece plastic container (10) of any one of claims 1 to 10 wherein the base portion (28) defines a plurality of facets (60) formed between adjacent modulating vertical ribs (80).

12. The one-piece plastic container (10) of claim 11 wherein said plurality of facets (60) formed between adjacent modulating vertical ribs (80) are generally linear.

13. The one-piece plastic container (10) of claims 11 wherein at least one of said plurality of facets (60) is entirely linear between adjacent modulating vertical ribs (80).

14. A method of making a blow-molded plastic container (10) comprising:

disposing a preform (44) in a mold cavity (81); and
blowing said preform (44) against a mold surface (82) of said mold cavity (81) to form an upper portion (14), a cylindrical sidewall portion (24) and a base portion (28), said sidewall portion (24) integrally formed with and extending between said upper portion (14) and said base portion (28), said base portion (28) closing off an end of the container (10) and defining a radial sidewall (50) and a contact surface formed around a central pushup portion (54) **characterized in that** the blowing of the preform (44) against the mold surface (82) is performed in such a way to obtain a generally planar and continuous contact surface (52) that is extending continuously around the central pushup portion (54) such that the continuous contact surface (52) is operable to support the container (10) in an upright position, and in such a way to obtain a plurality of modulating vertical ribs (80) that are defined on the base portion (28) generally at a transition between the generally planar and continuous contact surface (52) and the sidewall portion (24).

**Patentansprüche**

1. Einteiliger oder einstückiger Kunststoffbehälter (10), mit

- einem zylindrischen Körper (12), der eine Längsachse (L) definiert und einen oberen Abschnitt (14), einen Seitenwandabschnitt (24) und einen Bodenabschnitt (28) aufweist, wobei der Bodenabschnitt (28) eine radiale Seitenwand (50) und eine - um einen mittigen, angehobenen Abschnitt (54) ausgebildete - Kontaktfläche umfasst,

- **dadurch gekennzeichnet, dass** die Kontaktfläche (52) im Wesentlichen eben und durchgehend ist und sich durchgehend um den mittigen, angehobenen Abschnitt (54) erstreckt; dass der Behälter (10) an der im Wesentlichen ebenen und durchgehenden Kontaktfläche (52) endet, so dass die im Wesentlichen ebene und durchgehende Kontaktfläche (52) ausgebildet oder ausgelegt ist, den Behälter (10) betrieblich in einer aufrechten Stellung zu halten; und dass der Bodenabschnitt (28) außerdem eine Mehrzahl modulierender Vertikalrippen (80) umfasst, die allgemein an einem Übergang zwischen der im Wesentlichen ebenen und durchgehenden Kontaktfläche (52) und dem Seitenwandabschnitt (24) ausgebildet sind.

2.  Einteiliger Kunststoffbehälter (10) nach Anspruch 1, wobei sich der Seitenwandabschnitt (24) vom oberen Abschnitt (14) zum Bodenabschnitt (28) erstreckt und einstückig mit diesen ausgebildet ist, und wobei der Bodenabschnitt (28) ein Ende des Behälters (10) verschließt.

3.  Einteiliger Kunststoffbehälter (10) nach Anspruch 1 oder 2, wobei die Mehrzahl modulierender Vertikalrippen (80) aus sechs modulierenden Vertikalrippen (80) besteht.

4.  Einteiliger Kunststoffbehälter (10) nach Anspruch 1 oder 2, wobei die Mehrzahl modulierender Vertikalrippen (80) aus fünf modulierenden Vertikalrippen (80) besteht.

5.  Einteiliger Kunststoffbehälter (10) nach Anspruch 1 oder 2, wobei die Mehrzahl modulierender Vertikalrippen (80) aus sieben modulierenden Vertikalrippen (80) besteht.

6.  Einteiliger Kunststoffbehälter (10) nach einem der Ansprüche 1 bis 5, wobei der obere Abschnitt (14) einen Finish oder ein Endstück (20) aufweist.

7.  Einteiliger Kunststoffbehälter (10) nach Anspruch 6, wobei das Endstück (20) ein Mittel zur Anbringung eines Verschlusses bildet.

8.  Einteiliger Kunststoffbehälter (10) nach Anspruch 7, wobei das Mittel zur Anbringung eines Verschlusses zumindest ein Gewinde (38) umfasst.

9.  Einteiliger Kunststoffbehälter (10) nach einem der Ansprüche 1 bis 8, wobei der Behälter (10) Polyethylenterephthalat umfasst.

10. Einteiliger Kunststoffbehälter (10) nach einem der Ansprüche 1 bis 9, wobei der Seitenwandabschnitt (24) eine Mehrzahl von Rippen (32) aufweist/bildet, die im Wesentlichen senkrecht zur Längsachse (L) angeordnet sind.

11. Einteiliger Kunststoffbehälter (10) nach einem der Ansprüche 1 bis 10, wobei der Bodenabschnitt (28) eine Mehrzahl von Facetten (60) aufweist/bildet, die zwischen benachbarten modulierenden Vertikalrippen (80) ausgebildet sind.

12. Einteiliger Kunststoffbehälter (10) nach Anspruch 11, wobei die Mehrzahl zwischen benachbarten modulierenden Vertikalrippen (80) ausgebildeter Facetten (60) allgemein linear sind.

13. Einteiliger Kunststoffbehälter (10) nach Anspruch 11, wobei zumindest eine der Mehrzahl Facetten (60) zwischen benachbarten modulierenden Vertikalrippen (80) vollkommen linear ist.

14. Verfahren zum Herstellen eines blasgeformten Kunststoffbehälters (10), umfassend ...

    - Anordnen eines Vorformlings (44) in einem Formhohlraum (81), und
    - Blasformen des Vorformlings (44) gegen eine Formoberfläche (82) des Formhohlraums (81), wodurch ein oberer Abschnitt (14), ein zylindrischer Seitenwandabschnitt (24) und ein Bodenabschnitt (28) geformt wird, wobei sich der Seitenwandabschnitt (24) zwischen dem oberen Abschnitt (14) und dem Bodenabschnitt (28) erstreckt und einstückig mit diesen ausgebildet wird, und wobei der Bodenabschnitt (28) ein Ende des Behälters (10) verschließt und eine radiale Seitenwand (50) und eine - um einen mittigen angehobenen Abschnitt (54) ausgebildete - Kontaktfläche ausbildet oder definiert,

    **dadurch gekennzeichnet, dass** das Blasformen des Vorformlings (44) gegen die Formoberfläche (82) so ausgeführt wird, dass eine im Wesentlichen ebene und durchgehende Kontaktfläche (52) erhalten wird, die sich durchgehend um den mittigen angehobenen Abschnitt (54) erstreckt, so dass die durchgehenden Kontaktfläche (52) dafür ausgelegt oder ausgebildet wird, den Behälter (10) bei Benutzung in einer aufrechten Stellung oder Lage zu halten; und so ausgeführt wird, dass eine Mehrzahl modulierender Vertikalrippen (80) erhalten wird, die am Bodenabschnitt (28) und im Wesentlichen an/in einem Übergang zwischen der im Wesentlichen ebenen und durchgehenden Kontaktfläche (52) und dem Seitenwandabschnitt (24) ausgebildet werden.

## Revendications

1.  Récipient d'une seule pièce en plastique (10), comprenant:

    un corps cylindrique (12) qui définit un axe longitudinal (L) et qui présente une partie supérieure (14), une partie de paroi latérale (24) et une partie de base (28), ladite partie de base (28) définissant une paroi latérale radiale (50) et une surface de contact qui est formée autour d'une partie repoussée centrale (54), **caractérisé en ce que** la surface de contact (52) est essentiellement plane et continue et s'étend d'une façon continue autour de la partie repoussée centrale (54), **en ce que** le récipient (10) se termine à la surface de contact essentiellement plane et continue (52) de telle sorte que la surface de contact essentiellement plane et continue (52) puisse être utilisée pour supporter le récipient (10) dans une position verticale, et **en ce que** la partie de base (28) comprend également une pluralité de nervures verticales (80) qui sont définies essentiellement à une transition entre la surface de contact essentiellement plane et continue (52) et la partie de paroi latérale (24).

2. Récipient d'une seule pièce en plastique (10) selon la revendication 1, dans lequel ladite partie de paroi latérale (24) est intégralement formée avec et s'étend à partir de ladite partie supérieure (14) jusqu'à ladite partie de base (28), ladite partie de base (28) fermant une extrémité du récipient (10).

3. Récipient d'une seule pièce en plastique (10) selon la revendication 1 ou 2, dans lequel ladite pluralité de nervures verticales (80) est constituée de six nervures verticales (80).

4. Récipient d'une seule pièce en plastique (10) selon la revendication 1 ou 2, dans lequel ladite pluralité de nervures verticales (80) est constituée de cinq nervures verticales (80).

5. Récipient d'une seule pièce en plastique (10) selon la revendication 1 ou 2, dans lequel ladite pluralité de nervures verticales (80) est constituée de sept nervures verticales (80).

6. Récipient d'une seule pièce en plastique (10) selon l'une quelconque des revendications 1 à 5, dans lequel ladite partie supérieure (14) comporte une terminaison (20).

7. Récipient d'une seule pièce en plastique (10) selon la revendication 6, dans lequel ladite terminaison (20) définit des moyens pour attacher un moyen de fermeture sur celle-ci.

8. Récipient d'une seule pièce en plastique (10) selon la revendication 7, dans lequel lesdits moyens pour attacher un moyen de fermeture comprennent au moins un filet (38).

9. Récipient d'une seule pièce en plastique (10) selon l'une quelconque des revendications 1 à 8, dans lequel le récipient (10) est composé de polyéthylène téréphtalate.

10. Récipient d'une seule pièce en plastique (10) selon l'une quelconque des revendications 1 à 9, dans lequel ladite partie de paroi latérale (24) définit une pluralité de nervures (32) qui sont agencées de façon sensiblement perpendiculaire audit axe longitudinal (L).

11. Récipient d'une seule pièce en plastique (10) selon l'une quelconque des revendications 1 à 10, dans lequel la partie de base (28) définit une pluralité de facettes (60) qui sont formées entre des nervures verticales voisines (80).

12. Récipient d'une seule pièce en plastique (10) selon la revendication 11, dans lequel les facettes de ladite pluralité de facettes (60) qui sont formées entre des nervures verticales voisines (80) sont essentiellement linéaires.

13. Récipient d'une seule pièce en plastique (10) selon la revendication 11, dans lequel au moins une facette de ladite pluralité de facettes (60) est entièrement linéaire entre des nervures verticales voisines (80).

14. Procédé de fabrication d'un récipient en plastique moulé par soufflage (10), comprenant les étapes suivantes:

    disposer une préforme (44) dans une cavité de moule (81); et
    souffler ladite préforme (44) contre une surface de moule (82) de ladite cavité de moule (81) de manière à former une partie supérieure (14), une partie de paroi latérale cylindrique (24) et une partie de base (28), ladite partie de paroi latérale (24) étant intégralement formée avec et s'étendant entre ladite partie supérieure (14) et ladite partie de base (28), ladite partie de base (28) fermant une extrémité du récipient (10) et définissant une paroi latérale radiale (50) et une surface de contact qui est formée autour d'une partie repoussée centrale (54), **caractérisé en ce que** le soufflage de la préforme (44) contre la surface de moule (82) est exécuté de manière à obtenir une surface de contact essentiellement plane et continue (52) qui s'étend d'une façon continue autour de la partie repoussée centrale (54) de telle sorte que la surface de contact continue (52) puisse être utilisée pour supporter le récipient (10) dans une position verticale, et de manière à obtenir une pluralité de nervures verticales (80) qui sont définies sur la partie de base (28) essentiellement à une transition entre la surface de contact essentiellement plane et continue (52) et la partie de paroi latérale (24).

_Fig-1_

*Fig-2*

Fig-3

<u>Fig-4</u>

*Fig-5*

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20070108232 A